# EUROPEAN PATENT SPECIFICATION

(11) **EP 0 616 595 B1**
(45) Date of publication and mention of the grant of the patent: **01.10.1997**
(21) Application number: 93900130.1
(22) Date of filing: 18.12.1992
(51) Int. Cl.: B65G 47/248, B65G 21/16, A21B 1/48, A23L 3/18

(54) **Cooking apparatus**
Kochgerät
Appareil pour la cuisson des aliments

(30) Priority: 20.12.1991 AU 132/91
(43) Date of publication of application: 28.09.1994
(73) Proprietor: Vos Industries Pty Ltd, Malaga, Western Australia 6062 (AU)
(72) Inventor: VOS, Peter, Martin, Malaga, W.A. 6062 (AU)
(74) Representative: Livsey, Gilbert Charlesworth Norris
(86) International application number: AU9200671
(87) International publication number: WO9313001

(56) References cited:
- EP-A- 0 226 350
- DE-B- 1 095 223
- DE-C- 565 864
- DE-C- 635 157
- FR-A- 575 283
- FR-A- 2 187 639
- GB-A- 105 582
- GB-A- 1 487 591
- GB-A- 1 562 590
- US-A- 2 709 412

## Description

The present invention relates to apparatus for cooking food and has been developed in association with a method for cooking food.

It is known for example from EP A 2 226 350 to provide apparatus for cooking food where the food items to be cooked are placed upon conveyor means and transported through an oven which may include means for spraying heated fluids on to the food items to be cooked. However, the conveyor means currently used in the food industry, are ill suited or even unable to turn and tumble products. To achieve this result some current methods require the use of two separate conveyor belts and conveyors being placed at upper and lower levels to each other.

The cooking apparatus of the present invention provides a significant alternative to this method of conveying items. The conveyor means comprised in the apparatus of the present invention is arranged such that items mav be placed on a single conveyor belt arranged with one or a series of dips, so that in use, items tumble over at each dip and are, in general, turned. This has a particular benefit to food products as it enables them to be cooked more evenly and quickly.

The cooking apparatus provided according to the invention is defined in claim 1. Further preferred features are defined in the subsidiary claims.

### BRIEF DESCRIPTION OF THE DRAWINGS

Figure 1 is an upper perspective view of an embodiment of a conveyor in accordance with the present invention;
Figure 1A is an exploded view of the male and female drive coupling which may form part of the end roller and drive shaft to impart drive to the conveyor.
Figure 2 is a detail of a portion of the conveyor shown in Figure 1;
Figure 3 is a side view of a portion of the conveyor shown in Figure 1;
Figure 4 is a side view of the conveyor shown in Figure 1;
Figure 5 is a side view of the conveyor shown in Figure 1, but with the conveyor belt in a different arrangement;
Figure 6 is a further side view of the conveyor shown in Figure 1, but with the conveyor belt in a further different arrangement;
Figure 7 is a sectional side view of a cooking apparatus with the conveyor shown in Figure 1 in operative position therein; and,
Figure 8 is a perspective view of the cooking apparatus shown in Figure 7.

### DESCRIPTION OF THE INVENTION

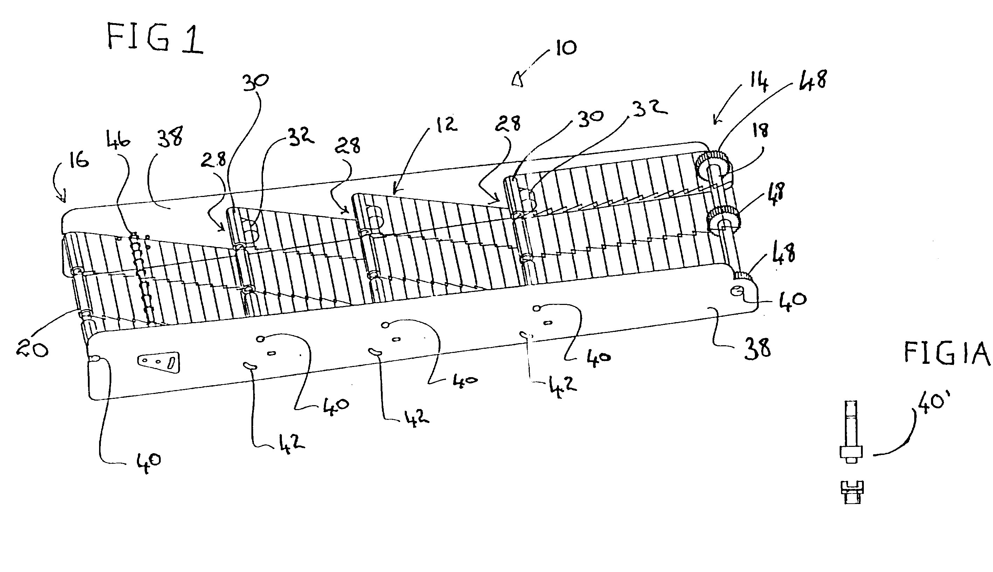

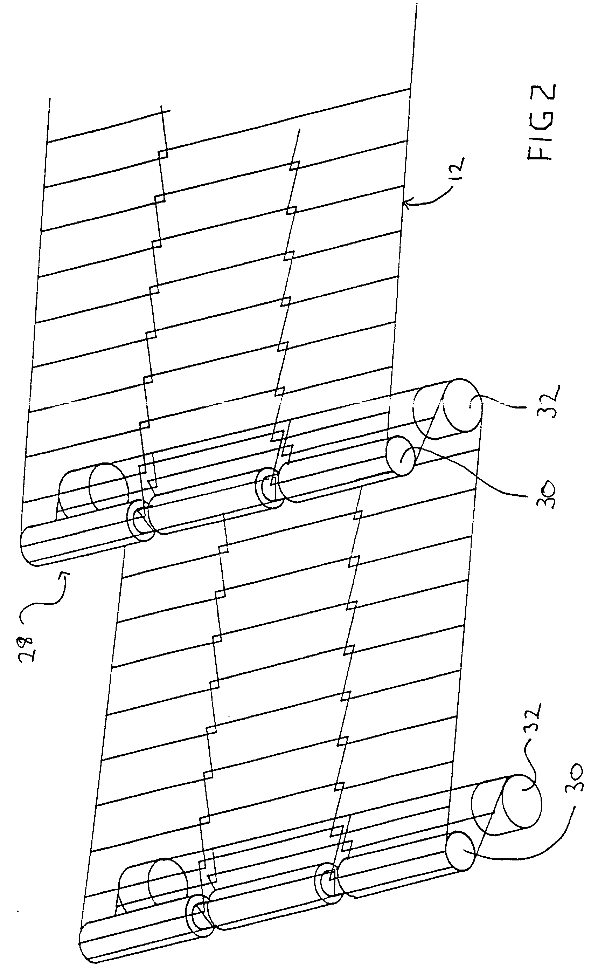

The following description is given by way of example only in embodiments of the conveyor apparatus of the present invention. In Figures 1 to 4, there is shown a conveyor 10 comprising a conveyor belt 12 positioned between first and second end parts 14 and 16, respectively, of the conveyor 10. The conveyor belt 12 is of the endless type and passes around and extends between a first end roller 18 and a second end roller 20, in looplike manner.

The first end roller 18 is positioned in the region of the first end part 14 of the conveyor 10. The second end roller 20 is positioned in the region of the second end part 16 of the conveyor 10. These rollers 18 & 20 may be fixed in such a way so as to provide a tensioning arrangement for the conveyor belt 12 by adjusting the position at which they are attached to the side frame members 38.

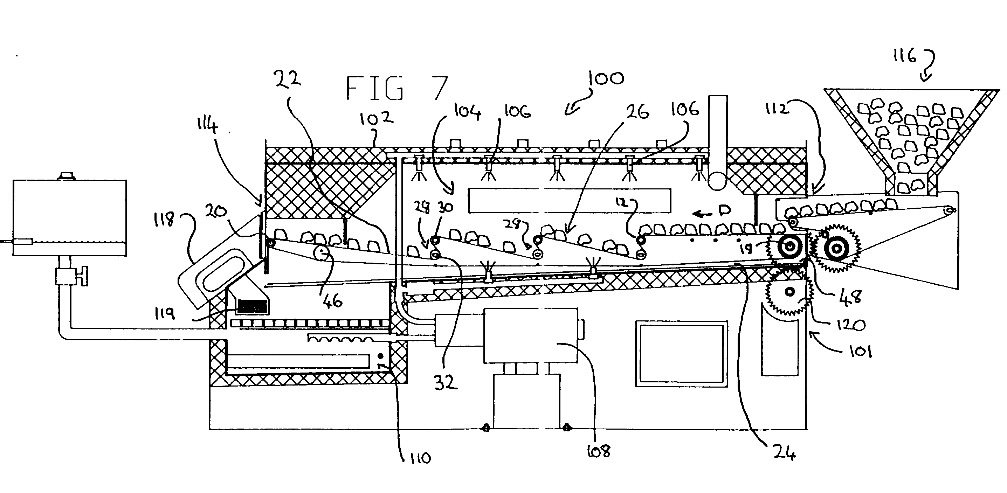

The conveyor belt 12 has an upper track portion 22 and a lower track portion 24. This can be seen in Figure 4. The upper track portion 22 of the conveyor belt 12 is able to convey items 26, as can been seen in Figure 7.

The upper track portion 22 of the conveyor belt 12 is provided with one or more dips 28. In Figures 1 and 4, the conveyor belt 12 is shown as provided with three dips 28. Each dip 28 is formed by the conveyor belt 12 passing over and around a first guide roller 30 and under and around a second guide roller 32.

The guide rollers 30 are positioned immediately beneath the horizontal line 34 (best seen in Figure 6 and shown partly in broken lines) at which the upper track portion 22 of the conveyor 12 would be positioned if there were no dips 28 in the conveyor belt 12. The guide rollers 32 are positioned below respective guide rollers 30. At each dip 28, the conveyor belt 12 passes over and around each guide roller 30 and extends downwardly to pass under and around a guide roller 32. The conveyor belt 12 extends upwardly from the guide roller 32 to the next guide roller 30. In this way, the guide rollers 30 and 32 guide the conveyor belt 12 from a first level to a second lower level at each dip 28. The conveyor belt 12 then extends upwardly to the next guide roller 30, as hereinabove described, which is also at the first level. This is best seen in Figure 4.

Further guide rollers 36 may be positioned beneath the guide rollers 32 to keep the lower track portion 24 of the conveyor belt 12 out of contact with the guide rollers 32. The end rollers 18 and 20 and the guide rollers 30, 32 and 36 are rotatably mounted between a pair of side frame members 38 of the conveyor 10. For this purpose, the side frame members 38 are provided with holes or the like 40 so that the ends of the end rollers 18 and 20 and the guide rollers 30, 32 and 36 are retained therein.

Provision for adjusting the tension of the conveyor belt 12 may be incorporated into the conveyor 10. The conveyor belt tensioning arrangement may be provided by mounting the ends of the guide rollers 32 in pairs of curved slots 42 in respective side frame members 38. In such a case, the curved slots 42 are provided in place of the holes 40 for mounting the guide rollers 32.

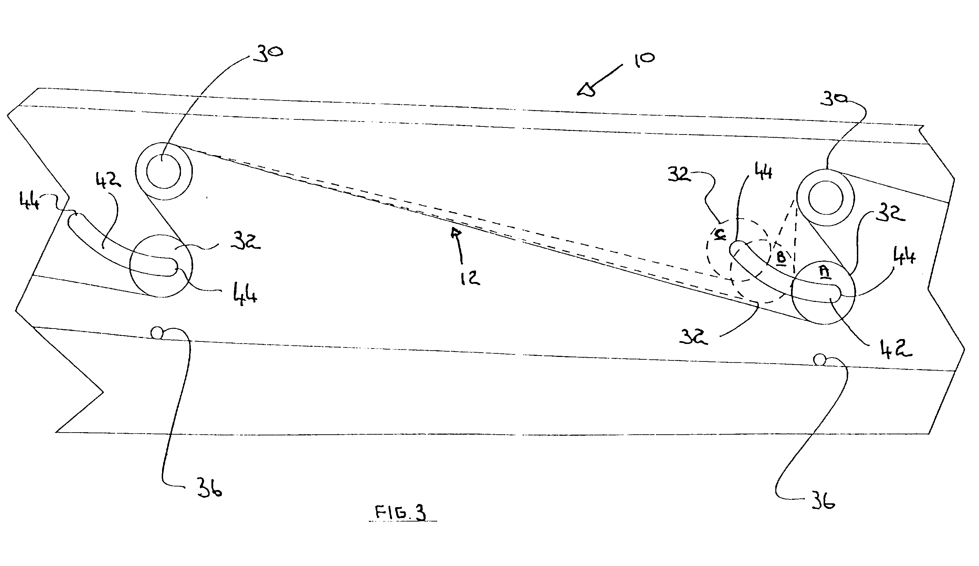

The curved slots 42 curve upwardly in a forward direction (i.e. in the direction of the second end part 16), as best seen in Figure 3.

Each guide roller 32 is repositionable in its respective curved slots 42.

The guide rollers 32 can be locked into position at any required position between the ends 44 of their respective curved slots 42.

The guide roller 32 shown at the right in Figure 3 imparts greatest tension to the conveyor belt 12 when it is in position A and least tension at position C. Position B is an intermediate position.

Accordingly, in the above described manner the guide rollers 32 may also act as tensioning rollers for the conveyor belt 12 i.e. guide/tension rollers 32.

The conveyor 10 may also be provided with a wiper roller 46 to wipe excess fluid from the conveyor belt 12.

The conveyor 10 may be further provided with a drive mechanism. One such mechanism may use toothed wheels 48 to impart drive to the conveyor from a drive mechanism 101 (shown in Figure 7) which does not form part of the present invention. Toothed wheels 48 may be provided on the end roller 18.

The conveyor belt 12 is of a form such that fluid can pass therethrough.

The conveyor belt 12 shown in the drawings is made of a grid-like mesh of interconnected wire, and readily enables fluid to pass therethrough.

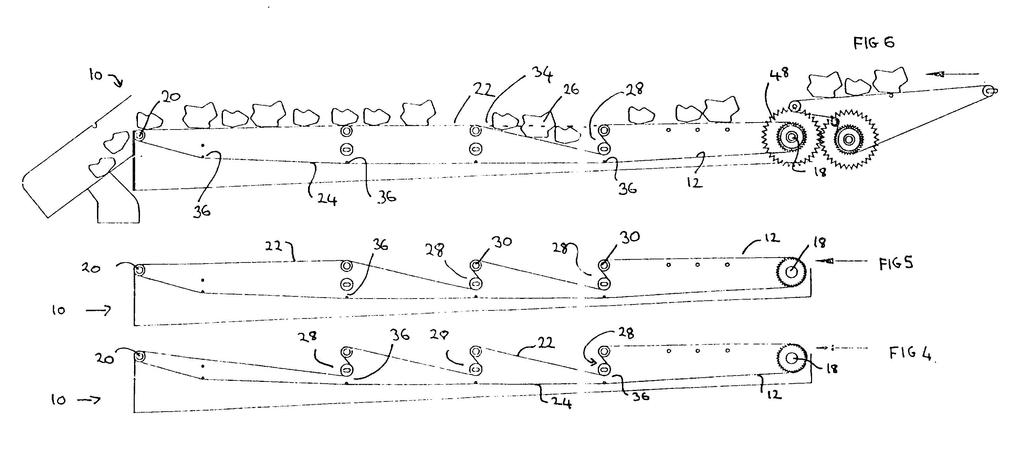

Figure 5 shows how the conveyor belt 12 may be provided with two dips 28, while in Figure 6 the conveyor belt 12 has only one dip 28. Thus, any number of dips 28 may be provided depending upon the length of the conveyor 10 and the nature of the items 26 being conveyed.

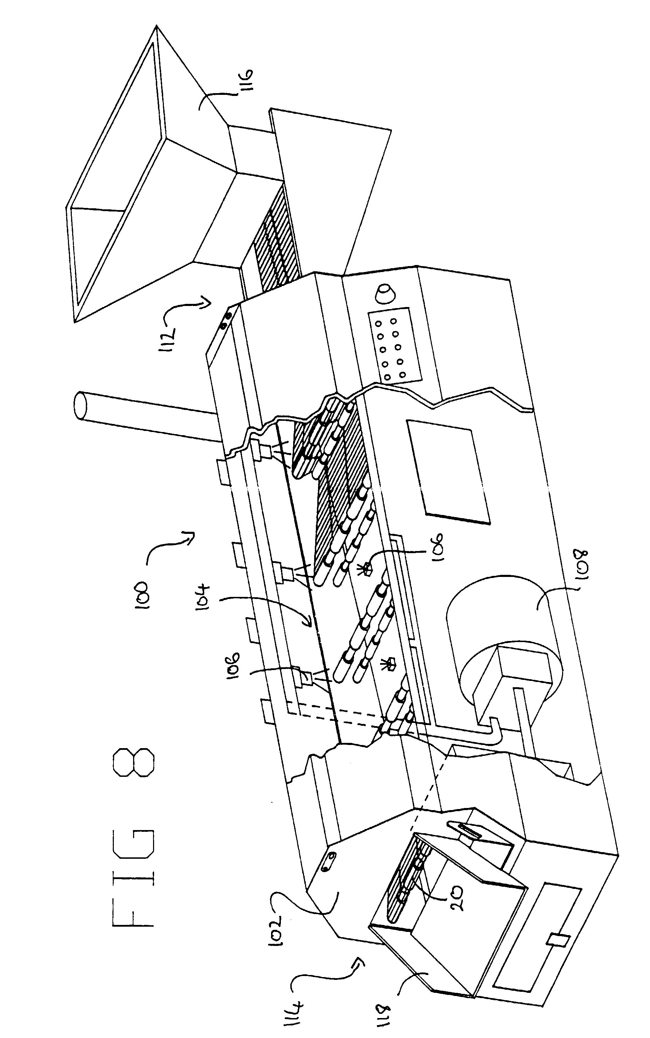

The conveyor 10 of the present invention may be used to convey food items 26 in a cooking apparatus 100 shown in Figures 7 and 8. However, the cooking apparatus 100 in its detail does not, itself, form part of the present invention.

The conveyor 10 is positioned in a housing 102 of the cooking apparatus 100 such that it conveys food through a cooking chamber 104. Spray nozzles 106 spray cooking fluid into the cooking chamber 104 to cook the food items 26 travelling on the conveyor belt 12. If desired, only the upper or lower set of spray nozzles 106 may be operated or provided. A pump assembly 108 pumps cooking fluid from a heating cooking fluid collector arrangement 110 to the spray nozzles 106. The sprayed cooking fluid is returned and reheated and then sprayed again.

The food items 26 enter at an inlet end 112 of the housing 102 and leave at an outlet end 114. The food items 26 may be loaded at the inlet end 112 by a loading sub-conveyor 116 and discharged at the outlet end 114 by a discharge chute 118, which incorporates a filter 119.

Toothed drive wheels or suitably fashioned sprockets 48 may be permantly attached to the end roller 18. Drive may then be imparted to the conveyor through the end roller 18 by locking one end of the end roller 18 into a suitable drive mechanism. In the present embodiment of the invention the end roller 18 has been designed so as to be easily detachable from the drive mechanism 101 by use of a male and female drive coupling 40'. The drive end of the first end roller 18 is configurated so as to slide out from the drive shaft of the drive mechanism 101 so as to enable the conveyor 10 to be readily removed from the cooking chamber 104 for cleaning and servicing. Once the drive is applied to the front end roller 18, the upper track portion 22 of the conveyor belt 12 then moves in the direction shown by arrow D in Figure 7. The food items 26 pass through the cooking chamber 104 on the upper track portion 22 of the conveyor belt 12 and are cooked by the cooking fluid being sprayed from the spray nozzles 106.

When the conveyor belt 12 passes over the guide roller 30 of a dip 28, any food items 26 at that part of the conveyor belt 12 fall onto the lower level of the conveyor belt 12 adjacent the guide tensioning roller 32 of that dip 28. The food items 26 then travel in an upwardly inclined manner to the next dip 28 and eventually to the second end part 16 of the conveyor 10.

The provision of the dips 28 means that the food items 26 undergo a tumbling like effect in their passage on the conveyor belt 12. This causes the orientation of the food items 26 on the conveyor belt 12 to be changed by the dips 28. This, in turn, provides more even and rapid cooking of the food items 26 since the outer surfaces of the food items are contacted from different angles by the cooking fluid being sprayed from the nozzles 106.

## Claims

1. A spray cooking apparatus comprising:
a housing (102);
a cooking chamber (104) located within said housing (102) and having longitudinally spaced inlet and outlet ends (14,16);
a conveyor means (10) to convey food to be cooked through said cooking chamber (104), said conveyor means (10) being substantially linear and longitudinally disposed between said inlet and outlet ends (14,16);
loading means (116) to load food into said cooking chamber (104) without entrainment of said food in a liquid; and
spray means (106) for delivering liquid cooking medium longitudinally disposed along the length of said cooking chamber (104), said spray means (106) spraying said food with a cooking liquid as said food passes through said cooking chamber (104) to cook said food;
means to collect excess cooking liquid for reuse in cooking of food;
characterised in that said conveyor means (10) comprises a conveyor belt means (12) the continuous belt thereof having a portion (22) arranged to convey food items, and comprising at least one dip (28) such that, in use at a said dip (28), food items fall from a first level of the conveyor belt means (12) to a lower level of said conveyor belt means (12), said conveyor belt means returning to said first level after each said at least one dip (28).

2. A spray cooking apparatus as claimed in claim 1 characterised in that a plurality of dips (28) are spaced along the length of said conveyor means (12).

3. A spray cooking apparatus as claimed in any one of claims 1 or 2 characterised in that said conveyor means (12) comprises a grid like mesh capable of allowing cooking liquid to pass therethrough.

4. A spray cooking apparatus as claimed in any one of claims 1 to 3 further comprising a tensioning device positioned at either or both the first and second end parts of the conveyor.

5. A spray cooking apparatus as claimed in any one of claims 1 to 4 wherein the conveyor includes a male to female drive coupling for the end roller to attach to a drive mechanism with gear wheels or sprockets fixed to the end roller thereby imparting the drive to the conveyor.

6. A spray cooking apparatus as claimed in any one of claims 1 to 5 wherein at the location of each dip (28) the conveyor belt (12) runs over an upper roller (30) and then over a further roller (32) located immediately below the associated upper roller (30), and wherein at least one lower roller (32) is adjustably mounted so that the tension of the belt (12) can be varied.

## Patentansprüche

1. Eine Sprühkochvorrichtung umfassend:
ein Gehäuse (102);
eine Kochkammer (104), die im Gehäuse (102) angeordnet ist und die in Längsrichtung voneinander beabstandet, ein Eingangs- und ein Ausgangsende (14, 16) aufweist;
eine Fördereinrichtung (10), um zu kochende Nahrungsmittel durch die Kammer (104) zu fördern, wobei die Fördereinrichtung (10) im wesentlichen linear und in Längsrichtung zwischen dem Eingangs- und dem Ausgangsende (14, 16) angeordnet ist;
eine Aufgabeeinrichtung (116), um Nahrungsmittel in die Kochkammer (104) aufzuheben, ohne daß das Nahrungsmittel in eine Flüssigkeit eintaucht;
eine Sprüheinrichtung (106) zum Abgeben von flüssigem Kochmedium, die in Längsrichtung über die Länge der Kochkammer (104) angeordnet ist, wobei die Sprüheinrichtung Nahrungsmittel mit einer Kochflüssigkeit besprüht, um das Nahrungsmittel zu kochen, während sich das Nahrungsmittel durch die Kochkammer (104) bewegt;
eine Einrichtung zum Auffangen überschüssiger Kochflüssigkeit für das Wiederverwenden beim Kochen von Nahrungsmitteln;
dadurch gekennzeichnet, daß die Fördereinrichtung (110) ein Förderband (12) aufweist, dessen endloses Band einen Abschnitt (22) aufweist, der zum Fördern von Nahrungsmittelstücken angeordnet ist, und der wenigstens eine Vertiefung (28) aufweist, derart daß bei Verwendung Nahrungsmittelstücke im Bereich dieser Vertiefung (28) von einem ersten Niveau des Förderbandes (12) auf ein niedrigeres Niveau des Förderbandes (12) fallen, wobei das Förderband nach der wenigstens einen der Vertiefung (28) auf das erste Niveau zurückkehrt.

2. Eine Sprühkochvorrichtung, wie in Anspruch 1 beansprucht, dadurch gekennzeichnet, daß über die Länge der Fördereinrichtung (12) mit Abstand mehrere Vertiefungen (28) vorsehen sind.

3. Eine Sprühkochvorrichtung, wie in Anspruch 1 oder 2 beansprucht, dadurch gekennzeichnet, daß die Fördereinrichtung (12) ein gitterartiges Gewebe umfaßt, das Kochflüssigkeit durchtreten lässt.

4. Eine Sprühkochvorrichtung, wie in einem der Ansprüche 1 bis 3 beansprucht, weiters umfassend eine Spannvorrichtung, die an einem oder an beiden der ersten und zweiten Endteile des Förderers angeordnet ist.

5. Eine Sprühkochvorrichtung, wie in einem der Ansprüche 1 bis 4 beansprucht, wobei der Förderer eine formschlüssig ineinandergreifende Antriebskupplung für die Endrolle aufweist, um sie mit einem Antriebsmechanismus, mit Zahnrädern oder Zahnkränzen, zu kuppeln, die an der Endwalze befestigt sind, und so den Förderer antreiben.

6. Eine Sprühvorrichtung, wie in einem der Ansprüche 1 bis 5 beansprucht, wobei das Förderband (12) im Bereich jeder Vertiefung (28) über eine obere Walze (30) läuft, dann über eine weitere Walze (32), die unmittelbar unter der zugeordneten, oberen Walze (30) angeordnet ist, und wobei wenigstens eine untere Walze (32) verstellbar montiert ist, so daß die Spannung des Bandes (12) verändert werden kann.

## Revendications

1. Appareil de cuisson avec moyen d'aspersion comprenant:
une enveloppe (102);
une chambre de cuisson (104) logée à l'intérieur de ladite enveloppe (102) et comportant des extrémités entrée et sortie (14, 16) distantes l'une de l'autre longitudinalement;
un moyen à convoyeur (10) pour convoyer les aliments à cuire au travers de ladite chambre de cuisson (104), ledit moyen à convoyeur (10) étant substantiellement linéaire et disposé longitudinalement entre lesdites extrémités entrée et sortie (14, 16);
un moyen de chargement (116) pour charger les aliments dans ladite chambre de cuisson (104) sans les entraîner dans un liquide; et
un moyen d'aspersion (106) pour alimenter le milieu liquide de cuisson placé longitudinalement le long de ladite chambre de cuisson (104), ledit moyen d'aspersion (106) aspergeant lesdits aliments de liquide de cuisson au fur et à mesure que lesdits aliments traversent la chambre de cuisson (104) pour y cuire;
un moyen de récupérer l'excédent de liquide de cuisson pour pouvoir le réutiliser pour la cuisson des aliments;
caractérisé par le fait que le moyen à convoyeur (10) comprend un moyen à bande transporteuse (12) dont la bande transporteuse comporte une portion(22) aménagée pour convoyer les éléments d'aliments, et comprend au moins un unique dénivellement (28) pour qu'au passage de ce dénivellement (28) les éléments d'aliments tombent d'un premier niveau du moyen à bande transporteuse (12) sur un second niveau du dit moyen à bande transporteuse (12), ledit moyen à bande transporteuse (12) retournant ensuite audit premier niveau après chacun desdits denivellements uniques (28).

2. Appareil de cuisson avec moyen d'aspersion selon la revendication 1,
caractérisé par le fait qu'une pluralité de dénivellements (28) sont disposés à intervalles sur toute la longueur du dit moyen à convoyeur (12).

3. Appareil de cuisson avec moyen d'aspersion selon l'une ou l'autre des revendications 1 et 2,
caractérisé par le fait que ledit moyen à convoyeur (12) comprend un dispositif maillé en forme de grille permettant au liquide de cuisson de passer au travers.

4. Appareil de cuisson avec moyen d'aspersion selon l'une quelconque des revendications 1 à 3 comprenant en outre un dispositif tendeur placé à l'une ou l'autre de la première et de la seconde partie extrémité du convoyeur.

5. Appareil de cuisson à moyen d'aspersion selon l'une quelconque des revendications 1 à 4 dans lequel le convoyeur comporte un accouplement d'entraînement mâle-femelle pour relier le rouleau d'extrémité au mécanisme d'entraînement par l'intermédiaire de roues dentées ou de pignons fixés au rouleau d'extrémité avec pour effet de transférer le mouvement d'entraînement au convoyeur.

6. Appareil de cuisson avec moyen d'aspersion selon l'une quelconque des revendications 1 à 5, dans lequel à l'emplacement de chaque dénivellement (28) la bande transporteuse (12) passe sur un rouleau supérieur (30) et ensuite sur un autre rouleau (32) placé immédiatement en-dessous du rouleau supérieur (30) auquel il est associé, et dans lequel appareil le montage d'au moins un rouleau inférieur (32) est réglable de manière à ce qu'il soit possible de faire varier la tension de la bande transporteuse (12).
